# EUROPEAN PATENT APPLICATION

(11) **EP 4 563 532 A1**
(43) Date of publication of application: **04.06.2025**
(21) Application number: 24779941.4
(22) Date of filing: 22.03.2024
(51) Int. Cl.: C01G 25/02, C09K 3/14

(54) **ZIRCONIA SOL AND METHOD FOR PRODUCING ZIRCONIA SOL**

(30) Priority: 30.03.2023 JP 2023054629
(71) Applicant: Daiichi Kigenso Kagaku Kogyo Co., Ltd., Osaka-shi, Osaka 541-0041 (JP)
(72) Inventor: TAKASAKI,Fumiyuki, Osaka-shi, Osaka 559-0025 (JP); KUNISADA,Taichi, Osaka-shi, Osaka 559-0025 (JP)
(74) Representative: Cabinet Beau de Loménie
(86) International application number: PCT/JP2024/011247
(87) International publication number: WO 2024/203823

(57) **Abstract**

Provided is a zirconia sol that has a particle diameter D₅₀ of 50 nm to 250 nm and a proportion X, obtained by the procedure detailed below, of at least 40%. (Procedure) A transmission electron microscope image that includes at least 20 isolated particles is obtained. The following operations (1) through (5) are performed on each of the isolated particles in the transmission electron microscope image. (1) A circumscribed circle and an inscribed circle having the same center as the circumscribed circle are obtained. (2) The ratio [(diameter of circumscribed circle)/(diameter of inscribed circle)] of the diameter of the obtained circumscribed circle and the diameter of the obtained inscribed circle is determined. (3) The ratio ([(diameter of circumscribed circle)/(diameter of inscribed circle)]) is determined for all of the isolated particles in the transmission electron microscope image. (4) The number of isolated particles A for which the ratio the ratio ([(diameter of circumscribed circle)/(diameter of inscribed circle)]) is at least 2.0 is counted. (5) The proportion X of the number of isolated particles A to the total number of isolated particles is determined.

## Description

### TECHNICAL FIELD

The present invention relates to zirconia sol and a method for producing zirconia sol.

### BACKGROUND ART

Zirconia sol is used as a raw material powder for fine ceramics, precision polishing agents, cosmetics, paint fillers, zirconia thin films, and the like (see, for example, Patent Document 1).

### PRIOR ART DOCUMENT

### PATENT DOCUMENT

Patent Document 1: JP-A-02-137732

### SUMMARY OF THE INVENTION

### PROBLEMS TO BE SOLVED BY THE INVENTION

An object of the present invention is to provide zirconia sol that is more suitable as abrasive grains for polishing. Another object of the present invention is to provide a method for producing the zirconia sol.

### MEANS FOR SOLVING THE PROBLEMS

The present invention provides the following.
[1] Zirconia sol, in which
   a particle diameter D₅₀ is in a range of 50 nm or more and 250 nm or less, and
   a proportion X attained by the following procedure is 40% or more:
   <procedure>
   a transmission electron microscope image containing 20 or more isolated particles is acquired, and
   the following operations 1) to 5) are performed on each of the isolated particles in the transmission electron microscope image:
      1) a circumscribed circle and an inscribed circle having the same center as the circumscribed circle are determined;
      2) a ratio [(diameter of circumscribed circle)/(diameter of inscribed circle)] of a diameter of the acquired circumscribed circle to a diameter of the acquired inscribed circle is determined;
      3) the ratio ([(diameter of circumscribed circle)/(diameter of inscribed circle)]) is determined for all of the isolated particles in the transmission electron microscope image;
      4) a number of isolated particles A having the ratio [(diameter of circumscribed circle)/(diameter of inscribed circle)] of 2.0 or more is counted; and
      5) a proportion X of the isolated particles A to all isolated particles is determined: (proportion X (%)) = [(number of isolated particles A)/(total number of isolated particles)] × 100.

It can be said that particles having the ratio [(diameter of circumscribed circle)/(diameter of inscribed circle)] of 2.0 or more have a square distorted shape. According to the configuration of [1], the proportion X is 40% or more and a certain number or more of particles having a square distorted shape are contained. Zirconia sol having such particles is useful as abrasive grains for polishing.

In particular, according to the configuration of [1], the particle diameter D₅₀ is within a range of 50 nm or more and 250 nm or less. In other words, according to the configuration of [1], the particle diameter D₅₀ is within the range of 50 nm or more and 250 nm or less, and a certain number or more of particles having a square distorted shape are contained therein. Zirconia sol, which has a particle diameter D₅₀ of 50 nm or more and 250 nm or less and contains particles having a distorted shape, is expected to achieve a higher rate and higher smoothness (low surface roughness) than existing products, particularly in precision polishing of semiconductors and the like.

Furthermore, the present invention provides the following.

The zirconia sol according to [1], in which the proportion X is 50% or more.

When the proportion X is 50% or more, the zirconia sol is more useful as abrasive grains for polishing.

Furthermore, the present invention provides the following.

The zirconia sol according to [1] or [2], in which the particle diameter D₅₀ is 200 nm or less.

When the particle diameter D₅₀ is 200 nm or less, the zirconia sol is more useful as abrasive grains for polishing.

Furthermore, the present invention provides the following.
A method for producing the zirconia sol according to any one of [1] to [3], the method including step A of adding ammonia water dropwise to an aqueous zirconium oxychloride solution to neutralize the solution, in which
a concentration of the aqueous zirconium oxychloride solution is 10% by mass or more (value in terms of ZrO₂, the same applies below),
a concentration of the ammonia water is 10% by mass or more, and
a volume of droplets of ammonia water dropped in the step A is 1.0 ml or less.

According to the configuration of [4], first, ammonia water is used as a neutralizer. Since ammonia water is used as the neutralizer, the zirconia sol of [1], that is, zirconia sol in which the proportion X is 40% or more, can be obtained. The reason for this is unclear, but the present inventors speculate that this is because ammonia water is a weak alkali compared to strong alkalis such as an aqueous sodium hydroxide solution, thus the formation of nuclei to be particles is slower, and the particle diameter is larger and the shape is distorted compared to a case of using a strong alkali.

According to the configuration of [4], in the neutralization step A, ammonia water having a specific concentration range in which the volume of droplets is controlled within a specific range is added dropwise to an aqueous zirconium oxychloride solution having a specific concentration range. Specifically, ammonia water having a concentration of 10% by mass or more is added dropwise to an aqueous zirconium oxychloride solution having a concentration of 10% by mass or more. The volume of droplets of ammonia water added dropwise is 1.0 ml or less. This makes it possible to obtain the zirconia sol of [1], that is, zirconia sol in which the proportion X is 40% or more. The reason for this is unclear, but the process in which an aqueous zirconium oxychloride solution reacts with ammonia water to produce zirconium hydroxide is considered to be as follows (1) and (2).
(1) Nuclei (presumed to be one such as a cluster represented by Chemical Formula {Zr(OH)₄}n) of zirconium hydroxide are formed by the reaction of zirconium oxychloride with ammonia, and
(2) aggregation of the nuclei of zirconium hydroxide and grain growth of the nuclei of zirconium hydroxide proceed simultaneously.

In this regard, the present inventors presume that the initial concentration of aqueous zirconium oxychloride solution, the concentration of ammonia water, and the volume of droplets when ammonia water is added dropwise are factors for determining the nucleation rate and the nucleation density, and as a result, are factors for controlling the balance between aggregation of the nuclei and grain growth of the nuclei in (2). It is considered that the particle properties (particle diameter, shape, and the like) of the finally obtained zirconia sol are determined by the particle properties (particle diameter, shape, and the like) of zirconium hydroxide produced in step A.

As described above, according to the configuration of [4], a large number of particles having a large particle diameter and a distorted shape are obtained by using, as a raw material, zirconium hydroxide obtained by using ammonia water as a neutralizer, setting the concentration of the aqueous zirconium oxychloride solution to 10% by mass or more, setting the concentration of ammonia water to 10% by mass or more, adding ammonia water dropwise to the aqueous zirconium oxychloride solution, and controlling the size of droplets of ammonia water during dropwise addition to 1.0 ml or less. In other words, zirconia sol in which the proportion X is 40% or more can be obtained.

On the other hand, in a case where the concentration of the aqueous zirconium oxychloride solution is less than 10% by mass, a case where the concentration of ammonia water is less than 10% by mass, and a case where the droplet volume during dropping of ammonia water exceeds 1.0 ml, the balance in (2) becomes inappropriate, and it is difficult to obtain the zirconia sol of (1).

### EFFECT OF THE INVENTION

According to the present invention, it is possible to provide zirconia sol which is more suitable as abrasive grains for polishing. It is possible to provide a method for producing the zirconia sol.

### BRIEF DESCRIPTION OF THE DRAWINGS

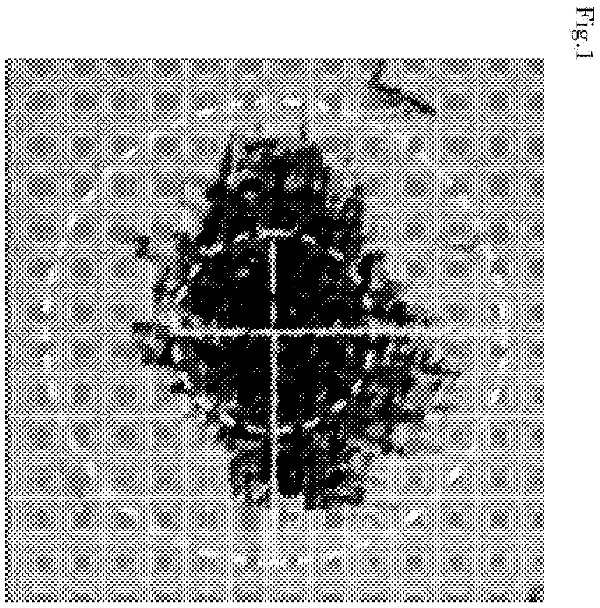

Fig. 1 is a diagram for explaining the circumscribed circle and inscribed circle of an isolated particle in a transmission electron microscope image.

### MODE FOR CARRYING OUT THE INVENTION

Hereinafter, embodiments of the present invention will be described. However, the present invention is not limited only to these embodiments. Zirconia (zirconium oxide) herein is common zirconia and contains metal compounds including hafnia as impurities at 10% by mass or less. The terms "comprise" and "contain" herein include the concepts of "comprise", "contain", "substantially consist of", and "consist of".

### [Zirconia sol]

Hereinbelow, an example of zirconia sol according to the present embodiment will be described. However, the zirconia sol of the present invention is not limited to the following example.

In the zirconia sol according to the present embodiment,
the particle diameter D₅₀ is in a range of 50 nm or more and 250 nm or less, and
the proportion X attained by the following procedure is 40% or more:
   <procedure>
   a transmission electron microscope image containing 20 or more isolated particles is acquired, and
   the following operations 1) to 5) are performed on each of the isolated particles in the transmission electron microscope image:
      1) a circumscribed circle and an inscribed circle having the same center as the circumscribed circle are determined;
      2) a ratio [(diameter of circumscribed circle)/(diameter of inscribed circle)] of a diameter of the acquired circumscribed circle to a diameter of the acquired inscribed circle is determined;
      3) the ratio ([(diameter of circumscribed circle)/(diameter of inscribed circle)]) is determined for all of the isolated particles in the transmission electron microscope image;
      4) a number of isolated particles A having the ratio [(diameter of circumscribed circle)/(diameter of inscribed circle)] of 2.0 or more is counted; and
      5) a proportion X of the isolated particles A to all isolated particles is determined: (proportion X (%)) = [(number of isolated particles A)/(total number of isolated particles)] × 100.

As described above, in the zirconia sol, the particle diameter D₅₀ is within a range of 50 nm or more and 250 nm or less.

The particle diameter D₅₀ is preferably 200 nm or less, more preferably 180 nm or less, still more preferably 150 nm or less.

The particle diameter D₅₀ is preferably 55 nm or more, more preferably 60 nm or more, still more preferably 65 nm or more.

The particle diameter D₅₀ is preferably 55 nm or more and 200 nm or less, more preferably 60 nm or more and 180 nm or less, still more preferably 65 nm or more and 150 nm or less.

The method for measuring the particle diameter D₅₀ is, in more detail, the method described in Examples.

In the zirconia sol, the proportion X attained by the following procedure is 40% or more.
<procedure>
a transmission electron microscope image containing 20 or more isolated particles is acquired, and
the following operations 1) to 5) are performed on each of the isolated particles in the transmission electron microscope image:
   1) a circumscribed circle and an inscribed circle having the same center as the circumscribed circle are determined;
   2) a ratio [(diameter of circumscribed circle)/(diameter of inscribed circle)] of a diameter of the acquired circumscribed circle to a diameter of the acquired inscribed circle is determined;
   3) the ratio ([(diameter of circumscribed circle)/(diameter of inscribed circle)]) is determined for all of the isolated particles in the transmission electron microscope image;
   4) a number of isolated particles A having the ratio [(diameter of circumscribed circle)/(diameter of inscribed circle)] of 2.0 or more is counted; and
   5) a proportion X of the isolated particles A to all isolated particles is determined: (proportion X (%)) = [(number of isolated particles A)/(total number of isolated particles)] × 100.

The proportion X is preferably 45% or more, more preferably 50% or more, still more preferably 55% or more, still more preferably 60% or more.

It is more preferable as the proportion X is larger, but is, for example, 99% or less, 90% or less, or the like.

The proportion X is preferably 45% or more and 99% or less, more preferably 50% or more and 99% or less, still more preferably 55% or more and 90% or less, particularly preferably 60% or more and 85% or less.

The proportion X is a value attained by the method described in Examples in more detail.

It can be said that particles having the ratio [(diameter of circumscribed circle)/(diameter of inscribed circle)] of 2.0 or more have a square distorted shape. According to the zirconia sol, the proportion X is 40% or more and a certain number or more of particles having a square distorted shape are contained. Zirconia sol having such particles is useful as abrasive grains for polishing.

In particular, according to the zirconia sol, the particle diameter D₅₀ is within a range of 50 nm or more and 250 nm or less. In other words, according to the zirconia sol, the particle diameter D₅₀ is within the range of 50 nm or more and 250 nm or less, and a certain number or more of particles having a square distorted shape are contained therein. Zirconia sol, which has a particle diameter D₅₀ of 50 nm or more and 250 nm or less and contains particles having a distorted shape, is expected to achieve a higher rate and higher smoothness (low surface roughness) than existing products, particularly in precision polishing of semiconductors and the like.

The concentration of the zirconia sol is not particularly limited, but is usually 5% by mass or more and 80% by mass or less in terms of ZrO₂. When the concentration of the zirconia sol is 5% by mass or more, it is possible to prevent the zirconia concentration from becoming low in the case of performing dilution with another solvent. When the concentration of the zirconia sol is 80% by mass or less, thickening of the sol is suppressed, and the stability is excellent.

The concentration of the zirconia sol is more preferably 10% by mass or more, still more preferably 15% by mass or more.

The concentration of the zirconia sol is more preferably 70% by mass or less, still more preferably 60% by mass or less.

The concentration of the zirconia sol is more preferably 10% by mass or more and 70% by mass or less, still more preferably 15% by mass or more and 60% by mass or less.

The dispersion medium for the zirconia sol is not particularly limited, and examples thereof include hydrophilic organic solvents such as water, methanol, ethanol, 2-propanol, acetone, and ether, and mixtures of one or more of the hydrophilic organic solvents. As the dispersion medium for the zirconia sol, preferably, water (pure water or ion-exchanged water) is usually used.

The pH of the dispersion medium for the zirconia sol is not particularly limited, but is usually preferably 7 or less, more preferably 1 or more and 6 or less. When the pH of the dispersion medium for the zirconia sol is 7 or less, the pH is far different from the isoelectric point of zirconia, and the stability is improved.

### <Polishing performance>

It is preferable that when soda glass (surface roughness Ra (arithmetic mean roughness): 0.3 µm or more and 0.5 µm or less) is polished using a liquid prepared by diluting the zirconia sol with pure water to a concentration of 5.0% by mass in terms of ZrO₂ as a polishing agent, the polishing rate is 0.12 µm/min or more and the surface roughness Ra of the polished surface is 0.6 nm or less.

When the polishing rate is 0.12 µm/min or more and the surface roughness Ra of the polished surface is 0.6 nm or less, a polished surface having a low surface roughness can be obtained in a short time.

The polishing rate is more preferably 0.13 µm/min or more, still more preferably 0.14 µm/min or more.

It is more favorable as the polishing rate is higher as long as the surface roughness does not exceed a certain level, but specifically, the polishing rate is more preferably 1.0 µm/min or less, still more preferably 0.7 µm/min or less.

The polishing rate is more preferably 0.12 µm/min or more and 1.0 µm/min or less, still more preferably 0.13 µm/min or more and 0.7 µm/min or less.

The surface roughness Ra of the polished surface is more preferably 0.55 nm or less, still more preferably 0.50 nm or less.

It is more preferable as the surface roughness Ra of the polished surface is smaller, but is, for example, 0.10 nm or more, 0.20 nm or more, or the like.

The surface roughness Ra of the polished surface is more preferably 0.10 nm or more and 0.55 nm or less, still more preferably 0.20 nm or more and 0.50 nm or less.

The zirconia so according to the present embodiment can be obtained by, for example, the following method for producing a zirconia sol.

### [Method for producing zirconia sol]

Hereinafter, an example of the method for producing a zirconia sol will be described. However, the method for producing a zirconia sol is not limited to the following example.

The method for producing zirconia sol according to the present embodiment includes:
step A of adding ammonia water dropwise to an aqueous zirconium oxychloride solution to neutralize the solution,
the concentration of the aqueous zirconium oxychloride solution is 10% by mass or more,
the concentration of the ammonia water is 10% by mass or more, and
the volume of droplets of ammonia water dropped in the step A is 1.0 ml or less.

### <Step A>

First, in step A, ammonia water is added dropwise to an aqueous zirconium oxychloride solution to neutralize the solution.

In the present embodiment, ammonia water is used as a neutralizer for zirconium oxychloride.

The concentration of ammonia water is 10% by mass or more.

The concentration of ammonia water is preferably 15% by mass or more, more preferably 20% by mass or more.

The concentration of ammonia water does not have a particular upper limit, but is, for example, 30% by mass or less, 28% by mass or less, or the like.

The concentration of ammonia water is preferably 15% by mass or more and 30% by mass or less, more preferably 20% by mass or more and 28% by mass or less.

The concentration of the aqueous zirconium oxychloride solution is 10% by mass or more.

The concentration of the aqueous zirconium oxychloride solution is preferably 15% by mass or more, more preferably 18% by mass or more.

The concentration of the aqueous zirconium oxychloride solution does not have a particular upper limit, but is, for example, 28% by mass or less, 25% by mass or less, or the like.

The concentration of the aqueous zirconium oxychloride solution is preferably 15% by mass or more and 28% by mass or less, more preferably 18% by mass or more and 25% by mass or less.

The volume of droplets of ammonia water dropped in the step A is 1.0 ml or less.

The volume of droplets is preferably 0.7 ml or less, more preferably 0.5 ml or less.

It is more preferable as the volume of droplets is smaller, but is, for example, 0.05 ml or more, 0.1 ml or more, or the like.

The volume of droplets is preferably 0.05 ml or more and 0.7 ml or less, more preferably 0.1 ml or more and 0.5 ml or less.

The time for dropping ammonia water in the step A is not particularly limited, but is preferably 10 minutes or more and 120 minutes or less, for example, in a case where 1000 ml of ammonia water is added dropwise to 1000 ml of aqueous zirconium oxychloride solution.

The dropping time is more preferably 90 minutes or less, still more preferably 60 minutes or less.

The dropping time is not particularly limited as long as it is within a range in which the reaction proceeds properly, and is, for example, 15 minutes or more, 20 minutes or more, or the like.

The dropping time is preferably 15 minutes or more and 90 minutes or less, more preferably 20 minutes or more and 60 minutes or less.

The temperature of the aqueous zirconium oxychloride solution and the temperature of ammonia water before the step A is carried out are not particularly limited, and may be set to, for example, the environmental temperature (for example, within the range of 20°C or more and 40°C or less). The temperature of the aqueous zirconium oxychloride solution and the temperature of ammonia water before the step A is carried out may be adjusted in advance.

In a case where the temperature is adjusted, the temperature of the aqueous zirconium oxychloride solution and the temperature of ammonia water before the step A is carried out are preferably 50°C or less, more preferably 40°C or less.

In a case where the temperature is adjusted, the lower limit values of the temperature of the aqueous zirconium oxychloride solution and the temperature of ammonia water before the step A is carried out are not particularly limited as long as they are within a range in which the reaction proceeds properly, and are, for example, 5°C or more, 10°C or more, or the like.

In a case where the temperature is adjusted, the temperature of the aqueous zirconium oxychloride solution and the temperature of ammonia water before the step A is carried out are preferably 5°C or more and 50°C or less, more preferably 10°C or more and 40°C or less.

According to the method for producing zirconia sol, since ammonia water is used as the neutralizer, the zirconia sol, that is, zirconia sol in which the proportion X is 40% or more, can be obtained.

According to the method for producing zirconia sol, since in the neutralization step A, ammonia water having a concentration of 10% by mass or more is added dropwise to an aqueous zirconium oxychloride solution having a concentration of 10% by mass or more, and the volume of droplets of ammonia water to be added dropwise is set to 1.0 ml or less, a large number of particles having a large particle diameter and a distorted shape are obtained. In other words, zirconia sol in which the proportion X is 40% or more can be obtained.

As described above, according to the method for producing zirconia sol, a large number of particles having a large particle diameter and a distorted shape are obtained by using ammonia water as a neutralizer, setting the concentration of the aqueous zirconium oxychloride solution to 10% by mass or more, setting the concentration of ammonia water to 10% by mass or more, and setting the droplet volume of ammonia water during dropping to 1.0 ml or less. In other words, zirconia sol in which the proportion X is 40% or more can be obtained.

After the step A, stirring is carried out if necessary for homogenization. A precipitate of zirconium hydroxide is thus obtained. The stirring time is not particularly limited and is, for example, 15 minutes or more and 120 minutes or less.

Thereafter, washing of zirconium hydroxide is performed if necessary. The washing is performed, for example, until the Cl concentration becomes equal to or less than a predetermined concentration. The predetermined concentration is preferably, for example, 0.01% or less. The washing method is not particularly limited, but examples thereof include a method in which an operation of separating zirconium hydroxide by filtration and dispersing zirconium hydroxide in ion-exchanged water is repeated.

Next, an acid is added as a peptizer.

The peptizer for zirconium hydroxide is not particularly limited as long as it is a water-soluble inorganic acid or organic acid, examples thereof include hydrochloric acid, nitric acid, sulfuric acid, acetic acid, lactic acid, citric acid, tartaric acid, malic acid, and mandelic acid, and hydrochloric acid and nitric acid are preferable because these acids can be easily removed by purifying the zirconia sol with water after zirconia sol production even when these acids are present in excess in the zirconia sol.

As the amount of peptizer added, acid/ZrO₂ (molar ratio) is 0.01 or more and 3 or less, more preferably 0.1 or more and 1.5 or less.

When the acid/ZrO₂ (molar ratio) is 0.01 or more, the peptization of zirconium hydroxide can be sufficiently conducted. The quantitative effect is small even when the acid/ZrO₂ (molar ratio) exceeds 3, and it is economical when the acid/ZrO₂ (molar ratio) is 3 or less.

Next, heating and aging are performed to peptize zirconium hydroxide. The heating and aging temperature is preferably 80°C or more, more preferably 90°C or more from the viewpoint of yield. The heating temperature is preferably 110°C or less, more preferably 105°C or less. The heating temperature is preferably 80°C or more and 110°C or less, more preferably 90°C or more and 105°C or less.

The heating and aging time is preferably 24 hours or more, more preferably 48 hours or more from the viewpoint of yield. The heating and aging time is preferably 120 hours or less, more preferably 100 hours or less. The heating and aging time is preferably 24 hours or more and 120 hours or less, more preferably 48 hours or more and 100 hours or less.

Thereafter, cooling to room temperature may be performed and then ultrafiltration may be carried out to concentrate the zirconia sol.

The acid excessively added can be easily removed by ultrafiltration.

The method for producing zirconia sol according to the present embodiment has been described above.

### EXAMPLES

Hereinafter, the present invention will be described in detail with reference to Examples, but the present invention is not limited to the following Examples as long as they do not depart from the gist of the present invention. Zirconia sol in Examples and Comparative Examples contain hafnium as unavoidable impurities at 1% to 3% by mass with respect to zirconium (calculated by the following Formula (X)). ([mass of hafnium oxide]/([mass of zirconium oxide] + [mass of hafnium oxide])) × 100 (%)

The maximum value and minimum value of the content of each component shown in the following Examples should be considered as the preferred minimum value and maximum value of the present invention regardless of the content of other components.

In addition, the maximum value and minimum value of the measured values shown in the following Examples should be considered to be the preferred minimum value and maximum value of the present invention regardless of the content (composition) of each component.

### [Production of zirconia sol]

### (Example 1)

To 1000 g of an aqueous zirconium oxychloride solution (10% by mass in terms of ZrO₂) adjusted to 25°C in a thermostatic bath, 1,380 g of ammonia water (10% by mass) also adjusted to 25°C was added dropwise over 30 minutes. At this time, the number of liquid delivery tubes and the dropping speed were adjusted so that the volume of droplets of ammonia water was in the range of 0.1 to 0.5 ml. Thereafter, stirring was continuously performed for 30 minutes to obtain a precipitate of zirconium hydroxide. The washing operation of separating zirconium hydroxide by filtration and dispersing zirconium hydroxide again in ion-exchanged water was repeatedly conducted. The operation was conducted until the Cl concentration became 0.01% or less.

The concentration of zirconium hydroxide after washing was 31.9% by mass in terms of ZrO₂. A slurry prepared by mixing 300 g of the obtained zirconium hydroxide with 299 g of ion-exchanged water and 39.1 g of nitric acid (60% by mass) was stirred and held under reflux at 100°C for 48 hours, and the obtained zirconia sol precursor was purified by ultrafiltration, thereby obtaining the zirconia sol according to Example 1.

### (Examples 2 to 4 and Comparative Example 1)

Zirconia sol according to each of Examples 2 to 4 and Comparative Example 1 were obtained in the same manner as in Example 1, except that the concentration of the aqueous zirconium oxychloride solution and/or the concentration of ammonia water were changed as shown in Table 1. In Table 1, "ZOC" means zirconium oxychloride.

### (Comparative Examples 2 and 3)

Zirconia sol according to each of Comparative Examples 2 and 3 were obtained in the same manner as in Example 1, except that the concentration of the aqueous zirconium oxychloride solution and/or the concentration of ammonia water and the volume of droplets of ammonia water were changed as shown in Table 1.

### (Comparative Example 4)

Zirconia sol according to Comparative Example 4 was obtained in the same manner as in Example 2, except that 15% by mass caustic soda (aqueous sodium hydroxide solution) was used instead of ammonia water.

### (Comparative Example 5)

Zirconia sol according to Comparative Example 5 was obtained in the same manner as in Example 1, except that a zirconia sol precursor obtained by holding an aqueous zirconium oxychloride solution diluted with pure water to a concentration of 1% by mass in terms of ZrO₂ under reflux at 100°C for 60 hours was used.

### [Measurement of particle diameter D₅₀]

The zirconia sol according to each of Examples and Comparative Examples was diluted with ion-exchanged water to a concentration of 0.1% by mass in terms of ZrO₂, and then injected into a device (dynamic light scattering particle size distribution measuring device ("Zetasizer Nano ZS" manufactured by Malvern Panalytical)), and the particle diameter D₅₀ of the zirconia sol was measured. The results are shown in Table 1.

### <Measurement conditions>

Measurement temperature: 25°C
Scattering angle: 173°
Dispersoid: ZrO₂
Dispersion medium: Water
Cell: Genuine disposable cell

### [Measurement of particle shape]

First, a TEM image (transmission electron microscope image) of the zirconia sol according to each of Examples and Comparative Examples was acquired. A transmission electron microscope (product name: HV-8100 manufactured by Hitachi, Ltd.) was used to take the TEM image, and the size of one visual field was set to 1.15 µm × 0.90 µm.

Next, the number of isolated particles was visually counted. Specifically, the number of particles in which the diameter of the circumscribed circle circumscribing the particle was 50 nm or more was counted. In a case where there were a plurality of circumscribed circles circumscribing the particle, one having the smallest ratio (see "2" below) of the diameter of the circumscribed circle to the diameter of the inscribed circle (concentric inscribed circle) having the same center as the circumscribed circle was adopted. The reason why particles in which the diameter of the circumscribed circle circumscribing the particle was less than 50 nm were not counted is because such particles have a low effect as a polishing agent.

In a case where the number of isolated particles was 20 or more, the TEM image was used as the image to be evaluated. In a case where the number of isolated particles was less than 20, a TEM image of a different visual field was taken, and this was repeated until a TEM image having 20 or more isolated particles was acquired.

The following operation was conducted for each isolated particle (the isolated particle to be counted) in the acquired TEM image.
1) First, a circumscribed circle of a particle and an inscribed circle(concentric inscribed circle) having the same center as the circumscribed circle were determined (see Fig. 1). The definitions of the circumscribed circle and inscribed circle are the same as those in the MCC method for circularity in JIS B 7451:1997.
2) Next, the ratio [(diameter of circumscribed circle)/(diameter of inscribed circle) ] of the diameter of the acquired circumscribed circle to the diameter of the acquired inscribed circle was determined.
3) The ratio [(diameter of circumscribed circle)/(diameter of inscribed circle)] was determined for all of the isolated particles (all isolated particles to be counted) in the TEM image.
4) The number of isolated particles (hereinafter, also referred to as "isolated particles A") having the ratio [(diameter of circumscribed circle)/(diameter of inscribed circle)] of 2.0 or more was counted.
5) The proportion (hereinafter, also referred to as "proportion X") of isolated particles A to all isolated particles (all isolated particles to be counted) was determined. (proportion X (%)) = [(number of isolated particles A)/(total number of isolated particles)] × 100.

The results are shown in Table 1.

### [Polishing performance evaluation]

Soda glass (Ra: 0.3 to 0.5 µm) was polished using a liquid prepared by diluting the zirconia sol according to each of Examples and Comparative Examples with pure water to a concentration of 5.0% by mass in terms of ZrO₂ as a polishing agent, and the polishing rate and the surface roughness Ra of the polished surface were measured.

The polishing conditions were set as follows.
Substrate (object to be polished): Soda glass (surface roughness Ra (arithmetic mean roughness): 0.3 µm or more and 0.5 µm or less)
Polishing device: Single-sided polishing device (EJ-380N manufactured by Engis Corporation)
Polishing pad: Suede type pad
Polishing load: 100 g/cm2 (9.8 kPa)
Rotation speed of platen: 80 rpm (linear speed: 9.5 m/min)
Polishing time: 15 minutes
Supply rate of polishing composition: 10 mL/min
Measurement area of object to be polished: 0.143 × 0.107 mm (surface roughness)
Pitch: 0.164 µm

The polishing rate was calculated from the difference between the weights of the substrate measured before and after polishing.

The surface roughness (arithmetic mean roughness (Ra)) of the polished surface of the object to be polished after polishing was measured using non-contact type 3D shape/surface roughness measuring device "NewView5032" manufactured by AMETEC under the condition having an angle of visibility of 0.143 × 0.107 mm. The results are shown in Table 1.

**[Table 1]**

| | Sol producing method | Zr hydroxide synthesis conditions | | | | | Physical properties of sol | | | Polishing performance evaluation | |
|---|---|---|---|---|---|---|---|---|---|---|---|
| | | ZrO₂ concentration in ZOC (wt%) | Neutralizer concentration (%) | Neutralizer for Zr hydroxide | Volume of neutralizer droplet (ml) | Dropping time of neutralizer (min) | pH after ultrafiltration | D₅₀ (nm) | Ratio of number of particles having shape parameter of 2.0 or more (%) | Glass polishing rate (µm/min) | Surface roughness Ra (nm) |
| Example 1 | Hydroxide peptization | 10 | 10 | Ammoniacal liquor | 0.1 to 0.5 | 30 | 3 | 88 | 78 | 0.19 | 0.41 |
| Example 2 | Hydroxide peptization | 15 | 15 | Ammoniacal liquor | 0.1 to 0.5 | 30 | 3 | 79 | 72 | 0.14 | 0.45 |
| Example 3 | Hydroxide peptization | 20 | 20 | Ammoniacal liquor | 0.1 to 0.5 | 30 | 3 | 76 | 61 | 0.15 | 0.41 |
| Example 4 | Hydroxide peptization | 23 | 23 | Ammoniacal liquor | 0.1 to 0.5 | 30 | 3 | 78 | 45 | 0.16 | 0.42 |
| Comparative Example 1 | Hydroxide peptization | 5 | 5 | Ammoniacal liquor | 0.1 to 0.5 | 30 | 3 | 62 | 21 | 0.06 | 0.40 |
| Comparative Example 2 | Hydroxide peptization | 10 | 10 | Ammoniacal liquor | 1 to 2 | 30 | 3 | 70 | 38 | 0.10 | 0.37 |
| Comparative Example 3 | Hydroxide peptization | 15 | 15 | Ammoniacal liquor | 1 to 2 | 30 | 3 | 56 | 35 | 0.07 | 0.41 |
| Comparative Example 4 | Hydroxide peptization | 15 | 15 | Caustic soda | 0.1 to 0.5 | 30 | 3 | 43 | - | 0.07 | 0.43 |
| Comparative Example 5 | ZOC hydrolysis | - | - | | - | - | 3 | 65 | 31 | 0.08 | 0.39 |

## Claims

1. Zirconia sol, wherein
a particle diameter D₅₀ is in a range of 50 nm or more and 250 nm or less, and
a proportion X attained by the following procedure is 40% or more:
<procedure>
a transmission electron microscope image containing 20 or more isolated particles is acquired, and
the following operations 1) to 5) are performed on each of the isolated particles in the transmission electron microscope image:
1) a circumscribed circle and an inscribed circle having the same center as the circumscribed circle are determined;
2) a ratio [(diameter of circumscribed circle)/(diameter of inscribed circle)] of a diameter of the acquired circumscribed circle to a diameter of the acquired inscribed circle is determined;
3) the ratio [(diameter of circumscribed circle)/(diameter of inscribed circle)] is determined for all of the isolated particles in the transmission electron microscope image;
4) a number of isolated particles A having the ratio [(diameter of circumscribed circle)/(diameter of inscribed circle)] of 2.0 or more is counted; and
5) a proportion X of the isolated particles A to all isolated particles is determined: (proportion X (%)) = [(number of isolated particles A)/(total number of isolated particles)] × 100.

2. The zirconia sol according to claim 1, wherein the proportion X is 50% or more.

3. The zirconia sol according to claim 1 or 2, wherein the particle diameter D₅₀ is 200 nm or less.

4. A method for producing the zirconia sol according to claim 1 or 2, the method comprising step A of adding ammonia water dropwise to an aqueous zirconium oxychloride solution to neutralize the solution, wherein
a concentration of the aqueous zirconium oxychloride solution is 10% by mass or more,
a concentration of the ammonia water is 10% by mass or more, and
a volume of droplets of ammonia water dropped in the step A is 1.0 ml or less.
